# EUROPEAN PATENT APPLICATION

(11) **EP 0 964 530 A1**
(43) Date of publication of application: **15.12.1999**
(21) Application number: 98110369.0
(22) Date of filing: 05.06.1998
(51) Int. Cl.: H04B 7/08, H04B 1/707

(54) **Radio communications receiver and interference cancellation method**

(71) Applicant: SIEMENS AKTIENGESELLSCHAFT, 80333 München (DE)
(72) Inventor: Brunner, Christopher, 80798 München (DE); Haardt, Martin, Dr., 81477 München (DE)

(57) **Abstract**

A radio communications receiver for detecting first and second contemporaneously transmitted radio signals representative of first and second data, the receiver comprising an adaptive antenna means (8, 10) which operates to detect at least one wave front from the first radio signals (y1, y2), and at least one wave front from the second radio signals, a first data detector which operates to re-generate first data from the at least one first wave front (y1, y2), an interference cancellation means (22) which operates to subtract the first radio signals, re-constituted from the first data, from the at least one second wave front (y3), consequent upon interference from the at least one first wave front to the at least one second wave front, and a second data detector (20) which operates to re-generate the second data from the at least one second wave front after the subtraction of the first wave front consequent upon the second radio signals, whereby first and second data are communicated contemporaneously on at least common parts of the radio frequency spectrum. The present invention finds application with wideband code division multiple access (W-CDMA) signals as well as time division-code division multiple access signals (TD-CDMA), and time division multiple access (TDMA) signals such as those generated by the GSM system.

## Description

The present invention relates to radio communications receivers which operate to detect radio signals contemporaneously transmitted by first and second transmitters and to recover first and second data, which the radio signals represent. Furthermore the present invention relates to methods of recovering first and second data from contemporaneously transmitted first and second radio signals. In particular, but not exclusively the present invention relates to wireless communications systems which include receivers arranged to recover data contemporaneously transmitted from a plurality of different transmitters.

Wireless communication systems are arranged to communicate data by transmitting radio signals representative of the data between transmitters and receivers of the system using part of the radio frequency spectrum. As a result of an increasing demand for radio communications, wireless communication systems are arranged to make an optimum use of an allocated part of the radio frequency spectrum. To this end, wireless communication systems are arranged to operate in accordance with a multiple access scheme which provides a means whereby a plurality of data communications channels may be contemporaneously supported in a way which, as far as possible, makes optimum use of the allocated radio frequency spectrum. An example of such a multiple acces scheme is time division multiple access in which data from a plurality of transmitters is communicated in a corresponding plurality of time slots into which a radio frequency carrier signal is divided. In this way a plurality of data communications channels are effected, with each time slot representing a contemporaneously supported channel.

To improve yet further a utilisation of the radio frequency spectrum allocated to a wireless communication system, receivers arranged to operate within such systems are known to include adaptive antenna arrays which utilise adaptive beamforming techniques to the effect of exploiting spatial diversity, which is inherent in the communication of radio signals.

An example of a receiver which provided with an adaptive antenna array, which exploits this spatial diversity is described in an article entitled 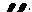 A two step spatio-temporal filtering scheme for smart antennas compared to a multi-user maximum likelihood algorithm" by C. Brunner, M. Haardt, C. Farsakh and J. A. Nossek, published in the proceedings of 48th IEEE Vehicular technology conference (VTC 1998), Ottawa, Canada, May 1998. This known receiver is provided with an antenna array, which, in combination with a spatio-temporal filter, operates to separate radio signals contemporaneously transmitted from different transmitters to the effect that data represented by each of the radio signals may be recovered by a data detector to which the separated radio signals are fed. As such a substantial increase in a number of communications channels provided by a wireless communications system may be effected by allowing transmission of radio signals contemporaneously. With this known arrangement, a data detector is assigned to each of the radio signals associated with a particular transmitter which have been separated in accordance with an angle of arrival of a wave front of the radio signals at the antenna array by the spatio-temporal filter, to the effect that the data detector recovers the data associated with a particular transmitter.

The term wave front is used herein to refer to a component of a radio signal which arrives at an antenna array at a particular angle having reached the antenna array via one of a plurality of distinct propagation paths. Thus the term wave front is used with analogue to the propagation of sound or compression waves, the front or leading part of which is known as the 'wave front'.

A disadvantage with this known apparatus is that interfering wave fronts can only be cancelled completely by the spatial filter if a relative difference in an angle of arrival of the wave fronts is substantially small. Furthermore, if, for example, a wave front of interest experiences a deep fade as a result of fast fading caused by the radio communications channel, the wave fronts reconstructed by the spatio-temporal filter may be corrupted by a stronger interfering radio signal wave front generated by another transmitter to the effect that a data detector can not recover the data which the radio signals represent.

It is an object of the present invention to provide a radio communications receiver which operates to detect and recover data from a plurality of contemporaneously transmitted radio signals.

The object of the invention is addressed generally by providing an antenna array and a spatio-temporal filter to separate the contemporaneously detected radio signal wave fronts and cancelling any interference between the signals before detecting the data which the radio signal wave fronts represent.

According to the present invention, there is provided radio communications receiver for detecting first and second contemporaneously transmitted radio signals representative of first and second data, said receiver comprising an adaptive antenna means which operates to detect at least one wave front from said first radio signals, and at least one wave front from said second radio signals, a first data detector which operates to recover first data from said at least one first wave front, an interference cancellation means which operates to subtract said first radio signals, re-constituted from said first data, from said at least one second wave front, consequent upon interference from said at least one first wave front to said at least one second wave front, and a second data detector which operates to recover said second data from said at least one second wave front after the subtraction of said first wave front, whereby first and second data are communicated contemporaneously on at least common parts of the radio frequency spectrum.

By arranging for an adaptive antenna system to detect and separate radio signal wave fronts formed by different radio signals transmitted from different transmitters, and by subsequently effecting an interference cancellation of one wave front from one radio signal, from a wave front of another radio signal, data from a relatively weak wave front or one which is corrupted by a stronger interfering wave front may be detected by the receiver.

The interference cancellation means may comprise a signal reconstitutor coupled to said first data detector, which operates to re-constitute said first radio signals in accordance with said detected first data and a form in which said first radio signals were transmitted, and a signal cancellation means which operates to substantially subtract said re-constituted first radio signals from said at least one second wave front thereby forming a substantially interference free version of said second radio signal.

The interference cancellation means may further include a cross correlation estimator, coupled to said adaptive antenna means and which operates to determine a cross correlation factor representative of an amount by which said at least one second wave front is interfered by said at least one first radio signal wave front, and a scaling means coupled between said signal re-constitutor and said signal cancellation means and arranged to scaled said re-constituted signals with said correlation factor.

The receiver according to the present invention provides an advantage in that data from different contemporaneously transmitted radio signals may detected, without the complexity of performing a full joint detection process, or a full interference cancellation process. A joint detection process is that used for example in detecting and recovering data represented as time division-code division multiple access radio signals an explanation of which is provided in an article, entitled 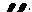 Performance of a Cellular Hybrid C-TDMA Mobile Radio System Applying Joint Detection and Coherent Receiver Antenna Diversity" by G. Blanz, A. Klein, M. Naßhan and A. Steil published in the IEEE Journal on Selected Areas in Communications, Volume 12, no. 4, May 1994 at page 568, the content of which is incorporated herein by reference. Furthermore, by combining an adaptive antenna system, having a spatio-temporal filter, with interference cancellation, a flexible trade off between computational complexity and performance can be effected.

A receiver in accordance with the present invention furthermore provides an advantage when used within a wireless mobile radio communications system in that a requirement for fast power control and soft hand over is substantially alleviated.

The interference cancellation may be effected by regenerating the interfering signal from previously detected data from a stronger of the radio signal wavefronts, and subsequently cancelling this regenerated signal from the weaker of the signals before data detection. A receiver in accordance with the present invention may be used in either a mobile station or a base station of a wireless communication system.

Interference cancellation may be effected reconstituting a stronger of the interfering signals by modulating and re-coding the detected data. The interference cancellation may be a joint detection processor in a case where the first and second radio signals have been generated in accordance with a time division-code division multiple access scheme.

According to an aspect of the present invention, there is provided a method of recovering first and second data from contemporaneously transmitted first and second radio signals, comprising the steps of detecting and separating the first and second radio signals into a plurality of radio signal wave fronts, at least one of which wave fronts is associated with the first radio signals, and at least one second of which wave fronts is associated with the second radio signals,
- determining a relative strength of the separated radio signal wave fronts, and consequent upon an amount of mutual interference between the first and second wave fronts,
- detecting the first or the second data where the strength of the wave fronts associated with the first or second radio signals is sufficient to recover the first or the second data in the presence of interference between the first and the second radio signals,
- substantially cancelling the first or the second radio signals from the other of the first or the second wave fronts consequent upon which of the first or the second data is detected, and
- detecting the other of the first and second data from the subtracted radio signals.

The step of cancelling the first or the second radio signals from the other of the first or the second wave fronts comprises the steps of re-constituting the first or second radio signals consequent upon which of the first and second data is recovered, in accordance with the detected data and a form in which the radio signals were transmitted, and subtracting the re-constituted radio signals from the other of the first or the second radio signals.

The method may further include the step of estimating a cross correlation factor between the first and the second radio signals, and scaling the re-constituted signals with the cross-correlation factor before subtracting the signals from the other of the first and second radio signals.

One embodiment of the present invention will now be described by way of example only with reference to the accompanying drawings wherein;
- FIGURE 1: is a schematic block diagram of part of a mobile radio communication system;
- FIGURE 2: is a schematic block diagram of a receiver for radio signals; and
- FIGURE 3: is a schematic block diagram of a spatio-temporal filter which appears in the schematic block diagram of the receiver in Figure 2.

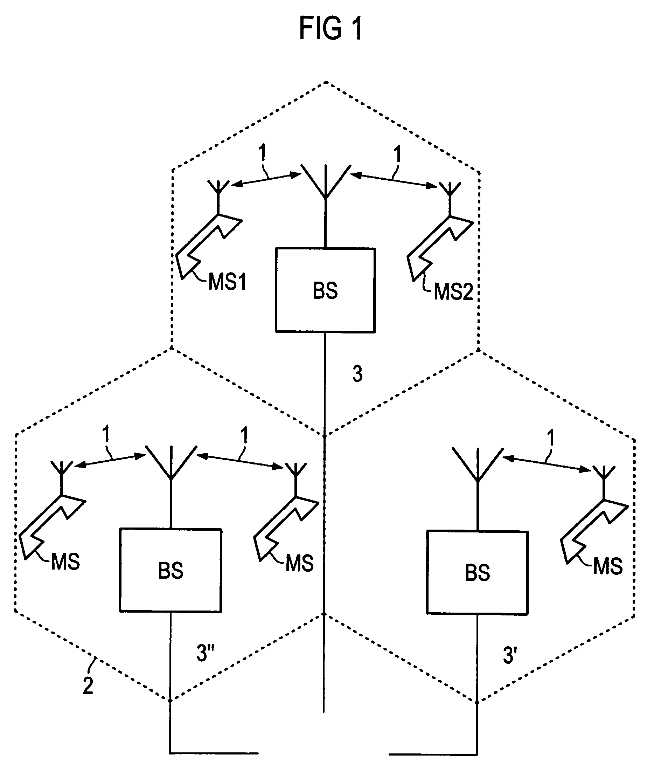

An example embodiment of the present invention will be described with reference to a wireless communications system, and in particular to a mobile radio telephone communications system. An example block diagram of a mobile radio communication system is shown in Figure 1. In Figure 1 three base stations BS form part of a mobile radio network, interconnected via an infra-structure (not shown). Data is communicated between mobile stations MS and the base stations BS, by transmitting and receiving radio signals 1, between the base stations BS and the mobile stations MS operating within a radio coverage area effected by each of the base stations which forms coverage cells 3, 3', 3''. The radio coverage area is shown illustrated as a broken line 2, and serves to indicate a boundary within which radio communications can be effected with the mobile stations MS. In the present illustrative embodiment the mobile stations MS communicate with the base stations BS via radio signals generated in accordance with that determined by the standard the Global System for Mobiles (GSM).

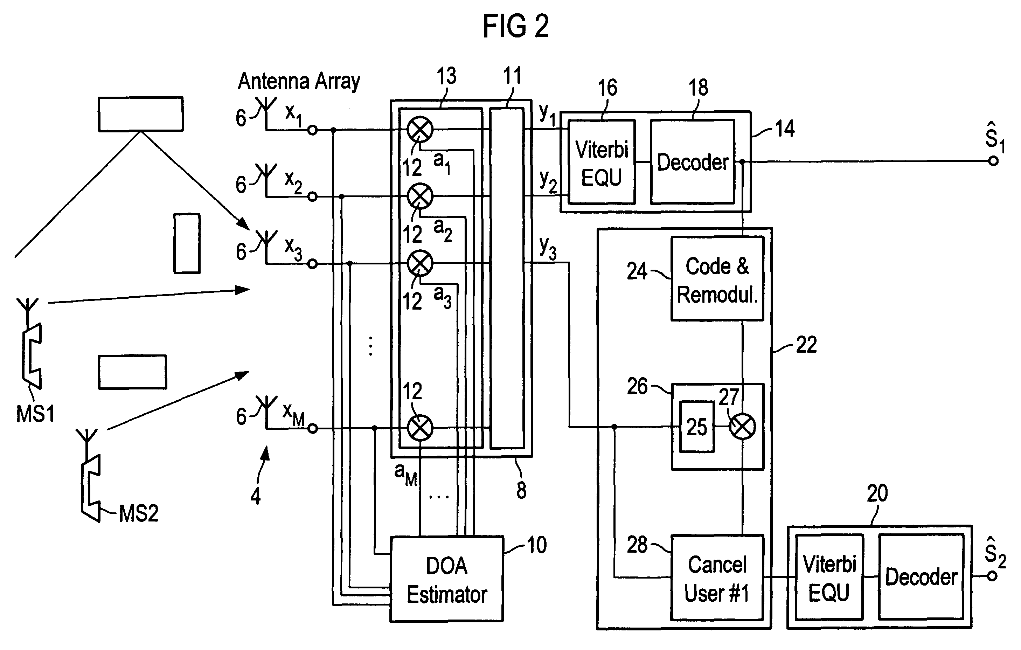

As illustrated in Figure 1, two mobile stations MS1, and MS2, in cell 3, are arranged to communicate bursts of radio signals contemporaneously in the same time slot and on the same frequency. In order to separate the data communicated by the first and second mobiles MS1 and MS2, a receiver embodied within the base station BS, is arranged to detect and separate the first and the second radio signals transmitted by the first and the second mobile stations MS1, MS2, in accordance with an inherent spatial diversity of these radio signals. An example embodiment of this receiver is shown in Figure 2, where parts also appearing in Figure 1 bear identical designations.

In Figure 2, an array of antennas 4 is provided with each antenna 6 of the array 4, being coupled to a corresponding input of a spatio-temporal filter 8. Coupled to further inputs of the spatio-temporal filter 8, is a direction of arrival estimator 10. The direction of arrival estimator 10 operates to generate a plurality of scaling coefficients *a*_{*i*} which are fed to first inputs of a plurality of multipliers 12, which form a spatial filter, 13. In effect each version of the radio signals detected by each of the antennas 6 are scaled with a corresponding coefficient *a*_{*i*} generated by the directional arrival estimator 10. The scaled versions of the radio signal are then fed to a wave front detector means 11, which operates to combine the received scaled radio signals to form at the outputs thereof each of a plurality of radio signal wavefronts represented by *y*_{*1*}. Each of the radio signal wavefronts is associated with radio signals transmitted by one of the mobiles and arriving at the antenna array 4 at a particular angle of arrival. Thus in effect the spatio temporal filter 8, operates to separate as far as possible, radio signals contemporaneously transmitted by each of the mobiles in accordance with the angle of arrival of these radio signals at the antenna array. As will be appreciated by those skills in the art, as a result of multipath propagation which is a characteristic of radio communications, a plurality of wavefronts may arrive at the antenna array which have been generated by the same transmitter. Therefore, as illustrated by the present example embodiment the wavefronts *y*_{*1*} and *y*₂ are associated with the radio signals transmitted by the first mobile station MS1, and are therefore fed to the same data detector. The wave front detector means 11, operates to estimate the channel impulse response associated with each of the wavefronts and thereby determines a relative strength of each of the wavefronts. The channel impulse responses are estimated by correlating the radio signals corresponding to each wave front with a training sequence embodied within the radio signals and which is known at the receiver. In accordance with the determined strength of the wavefronts, the spatio-temporal filter 8, is able to determine whether data may be recovered from a particular set of wavefronts associated with the same transmitted radio signals. In the example embodiment the wavefronts *y*_{*1*} and *y*_{*2*} associated with MS1 are fed to a data detector 14, which operates to detect and recover the data represented by these wavefronts *y*_{*1*} and *y*_{*2*}. In the present example embodiment the data is modulated onto the radio frequency signals in accordance with a radio communications transmission process determined in accordance with the GSM system. As such the data detector comprises a viterbi equaliser 16 and a data decoder 18.

A more detail explanation of the operation of the spatio-temporal filtering is provided in the above referenced article entitled 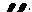 A two step spatio-temporal filtering scheme for smart antennas compared to a multi-user maximum likelihood algorithm" by C. Brunner, M. Haardt, C. Farsakh and J. A. Nossek.

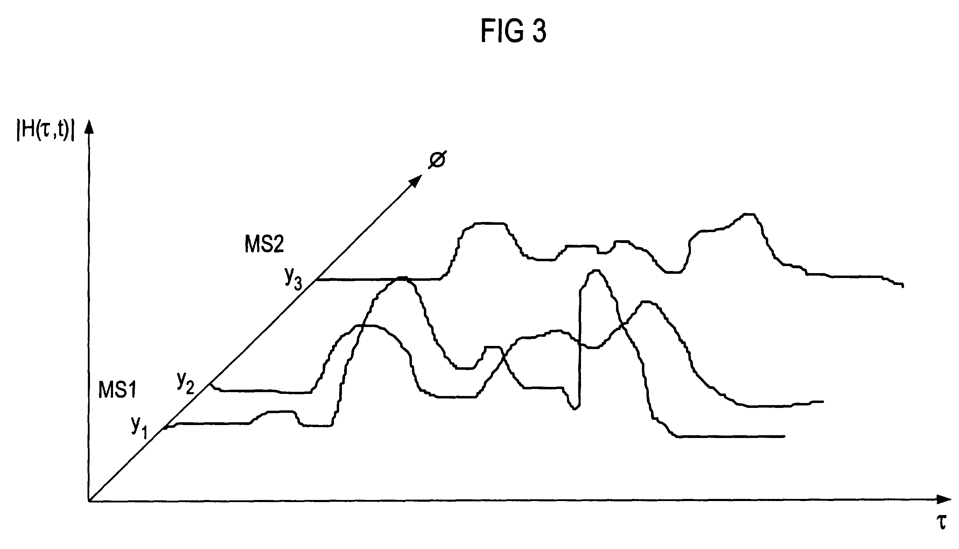

An example of the channel impulse response estimates determined by the wave front detector means 11, is illustrated in Figure 3. As will be appreciated from Figure 3, the signal strength of the radio signals generating the wavefronts *y*_{*1*} and *y*_{*2*} is considerably greater than the signal strength of the radio signals generating the wave front *y*_{*3*} transmitted by the second mobile station MS2. Therefore, in order to detect and recover the data communicated by the wavefront *y*_{*3*}, the stronger interfering radio signal wave fronts *y*_{*1*} and *y*_{*2*} generated by MS1, must be cancelled from the radio signal wave front *y*_{*3*} before data is detected by the data detector 20. In this way, the data represented by the radio signals transmitted by mobile station 2 may be recovered from the contemporaneously transmitted and thereby mutually interfering radio signals detected by the antenna array. Thus, in a presence of the stronger interfering signal represented by the radio signal wave fronts *y*_{*1*} and *y*_{*2*}, the receiver is able to recover the data transmitted by the second mobile station MS2, from the radio signal wave front *y*_{*3*} in spite of the presence of the stronger interfering signals from the first mobile station MS1. To this end, a signal cancellation means 22 is provided which is comprised of a signal re-constitutor 24 and a cross correlation estimator 26 and a signal cancellation means 28.

The temporal filter combiner operates to generate the channel impulse response corresponding to each of the mutually interfering radio signals from MS1 and MS2, by comparing the detected combined radio signal wavefronts with a training sequence embodied in the transmitted radio signals which is known to the temporal filter and combiner. Furthermore, by comparing the detected training sequences from each of the radio signals transmitted by MS1 and MS2, an estimate of a cross correlation factor, between the radio signal wavefronts may be determined. This is estimated by the cross correlation detector 26 and provides a scaling factor to scale the reconstituted interfering signal from MS1. Thus in order to cancel the interfering signals *y*_{*1*}, *y*_{*2*}, from the radio signal detected from MS2, the signal re-constitutor 24, operates to remodulate and recode the data which is detected at the output of the data detector 14. Thus at the output of the signal re-constitutor 24, there is a representation of the radio signals as transmitted by the mobile station MS1. By scaling these re-constituted signals by the correlation factor generated by the cross correlation detector 26, a representation of the interfering signals *y*_{*1*} and *y*_{*2*} as detected at the antenna array, is generated at the output of the cross correlation detector. This is effected by the cross correlation factor χ, which is fed to the multiplier 27, which operates to scale the re-constituted signals with the cross correlation factor χ. The radio signals corresponding to the detected wavefront *y*_{*3*} are therefore fed on a first input to the signal cancellor 28. To a second input of the signal correlator 28, are fed the scaled version of the re-constituted interfering signals from the first mobile station MS1. The signal cancellor subtracts the interfering signals from mobile station MS1 from those signals from mobile station MS2 represented by the detected wavefront *y*_{*3*}. At the output of the signal cancellor 28 radio signals substantially corresponding to those received only from mobile station 2 are provided which are fed to data detected data 20 which operates to recover data transmitted by the second mobile station MS2.

As will be appreciated by those skills in the art various modifications may be made to the aforementioned embodiment without departing from the scope of the present invention. In particular other modulating and coding schemes may be used to communicate data. However the present invention provides a particular example in that data from the interfering signal is cancelled after decoding and therefor is provided with a substantial coding gain to the affect that the reconstituted interfering radio signal may be more effectively cancelled from the desired signal. The present invention finds application with wideband code division multiple access (W-CDMA) signals as well as time division-code division multiple access signals (TD-CDMA), and time division multiple access (TDMA) signals such as those generated by the GSM system.

## Claims

1. A radio communications receiver for detecting first and second contemporaneously transmitted radio signals representative of first and second data, said receiver comprising
- an adaptive antenna means (8, 10) which operates to detect at least one wave front from said first radio signals (y1, y2), and at least one wave front from said second radio signals,
- a first data detector which operates to recover first data from said at least one first wave front (y1, y2),
- an interference cancellation means (22) which operates to subtract said first radio signals, re-constituted from said first data, from said at least one second wave front (y3), consequent upon interference from said at least one first wave front to said at least one second wave front, and
- a second data detector (20) which operates to recover said second data from said at least one second wave front after the subtraction of said first wave front, whereby first and second data are communicated contemporaneously on at least common parts of the radio frequency spectrum.

2. A radio communications receiver as claimed in claim 1, wherein interference cancellation means (22) comprises
- a signal re-constitutor (24) coupled to said first data detector (14), which operates to re-constitute said first radio signals in accordance with said detected first data and a form in which said first radio signals were transmitted, and
- a signal cancellation means (28) which operates to substantially subtract said re-constituted first radio signals from said at least one second wave front thereby forming a substantially interference free version of said second radio signals.

3. A radio communications receiver as claimed in Claim 2, wherein said interference cancellation means (22) further includes a cross correlation estimator (25, 26), coupled to said adaptive antenna means (8, 10) and which operates to determine a cross correlation factor (χ) representative of an amount by which said at least one second wave front (y3) is interfered by said first radio signal wave front (y1, y2), and a scaling means (27) coupled between said signal re-constitutor (24) and said signal cancellation means (28) and arranged to scaled said re-constituted signals with said correlation factor (χ).

4. A radio communications receiver as claimed in Claim 1, 2, or 3, wherein said adaptive antenna means (8, 10) has
- an array of antennas (6) coupled to
- a spatio-temporal filter (8) having a spatial filter (13) coupled to a wave front detector means (11), each of said antennas (6) operating to detect a version of said radio signals, which versions of said radio signals are combined by said spatio-temporal filter (8), said wave front detector means (11) operating to generate said plurality of radio signals wave fronts from said combined radio signal versions.

5. A radio communications receiver as claimed in any preceding claim, wherein said signal re-constitutor means (24) includes a modulator and a channel coder.

6. A radio communications receiver as claimed in claims 5, wherein said signal re-constitution means further includes means for combining said first data with a spreading code, said first radio signals being generated in accordance with code division multiple access.

7. A method of recovering first and second data from contemporaneously transmitted first and second radio signals, comprising the steps of
- detecting and separating said first and second radio signals into a plurality of radio signal wave fronts, at least one of which wave fronts is associated with said first radio signals, and at least one second of which wave fronts is associated with said second radio signals,
- determining a relative strength of said separated radio signal wave fronts, and consequent upon an amount of mutual interference between said first and second wave fronts,
- detecting said first or said second data where the strength of said wave fronts associated with said first or second radio signals is sufficient to recover said first or said second data in the presence of interference between said first and said second radio signals,
- substantially cancelling said first or said second radio signals from the other of said first or said second wave fronts consequent upon which of said first or said second data is detected, and
- detecting the other of said first and second data from said subtracted radio signals.

8. A method of recovering first and second data as claimed in Claim 7, wherein the step of cancelling said first or said second radio signals from the other of said first and said second wave fronts comprises the steps of
- re-constituting said first or second radio signals consequent upon which of said first and second data is recovered, in accordance with said detected data and a form in which said radio signals were transmitted, and
- subtracting said re-constituted radio signals from the other of said first or said second radio signals.

9. A method of recovering first and second data as claimed in Claim 8, and further including the step of
- estimating a cross correlation factor (χ) between said first and said second radio signals,
- scaling said re-constituted signals with said cross-correlation factor before subtracting said signals from the other of said first and second radio signals.

10. A radio communications receiver as herein before described with reference to the accompanying drawings.
